# EUROPEAN PATENT SPECIFICATION

(11) **EP 3 275 908 B1**
(45) Date of publication and mention of the grant of the patent: **12.02.2020**
(21) Application number: 16768353.1
(22) Date of filing: 04.03.2016
(51) Int. Cl.: C08F 220/06, C08F 220/04, C08F 222/06, C08F 216/14, C08F 216/12, C02F 1/56

(54) **COPOLYMER**
COPOLYMER
COPOLYMÈRE

(30) Priority: 25.03.2015 JP 2015062003; 29.02.2016 JP 2016036615
(43) Date of publication of application: 31.01.2018
(73) Proprietor: Nippon Shokubai Co., Ltd., Osaka-shi, Osaka 541-0043 (JP)
(72) Inventor: YAMAGUCHI, Shigeru, Suita-shi Osaka 564-8512 (JP); MATSUMOTO, Rika, Suita-shi Osaka 564-8512 (JP)
(74) Representative: Plasseraud IP
(86) International application number: PCT/JP2016/056718
(87) International publication number: WO 2016/152450

(56) References cited:
- EP-A1- 0 184 894
- EP-A1- 0 302 153
- EP-A1- 2 522 680
- EP-A2- 0 942 015
- WO-A2-2004/024856
- JP-A- H0 372 502
- JP-A- H02 209 908
- JP-A- H10 118 694
- JP-A- 2002 173 351
- JP-A- 2003 192 784
- JP-A- 2011 521 012
- JP-A- 2012 057 096
- JP-A- 2012 224 680
- JP-A- 2014 062 176

## Description

### Technical Field

The present invention relates to a copolymer.

### Background Art

A copolymer having a structural unit derived from a monoethylenically unsaturated monocarboxylic acid (salt) monomer and a structural unit derived from a monomer serving as a monoethylenically unsaturated dicarboxylic acid (salt) or an anhydride thereof has heretofore been reported as a copolymer that can be used in a water treatment agent or the like (see, for example, Patent Literature 1).

The water treatment agent is required to be capable of expressing an excellent calcium ion-trapping ability. When the calcium ion-trapping ability is poor, the affinity of the agent for a calcium ion or a magnesium ion weakens, with the result that a satisfactory scale-inhibiting ability is not obtained.

### Citation List

### Patent Literature

[PTL 1] WO 2012/132892 A1

JP 2012-224680 discloses a (meth)acrylic acid-type copolymer comprising a structural unit derived from a sulfonic acid group containing unsaturated ether, a structural unit derived from (meth)acrylic acid salt, and a structural unit derived from maleic acid salt.

JP 2012-57096 discloses a polyalkylene glycol-type polymer, which contains a structural unit derived from a sulfonic acid group containing unsaturated ether and a structural unit derived from carboxyl group-containing monomer.

### Summary of Invention

### Technical Problem

An object of the present invention is to provide a novel copolymer that can express an excellent calcium ion-trapping ability.

### Solution to Problem

According to one embodiment of the present invention, there is provided a copolymer, including: 0.1 mol% to 99 mol% of a structural unit (A) derived from a monoethylenically unsaturated monocarboxylic acid (salt) monomer (a); 0.1 mol% to 99 mol% of a structural unit (B) derived from a monomer (b) serving as a monoethylenically unsaturated dicarboxylic acid (salt) or an anhydride thereof; and 0.1 mol% to 50 mol% of a structural unit (C) derived from an ether bond-containing hydrophobic monomer (c).

In a preferred embodiment, a total content of the structural unit (A), the structural unit (B), and the structural unit (C) with respect to a total of all structural units derived from monomers in the copolymer is from 90 mol% to 100 mol%.

In a preferred embodiment, a content of the structural unit (C) with respect to a total of all structural units derived from monomers in the copolymer is from 1 mol% to 10 mol%.

In a preferred embodiment, the copolymer of the present invention has a weight-average molecular weight of from 1,000 to 500,000.

In a preferred embodiment, the ether bond-containing hydrophobic monomer (c) is 1-allyloxy-3-butoxypropan-2-ol.

### Advantageous Effects of Invention

According to the present invention, the novel copolymer that can express an excellent calcium ion-trapping ability can be provided.

### Description of Embodiments

The term "acid (salt)" as used herein means an acid and/or an acid salt. Preferred examples of the "salt" include : alkali metal salts, such as a sodium salt and a potassium salt; alkaline earth metal salts, such as a calcium salt and a magnesium salt; ammonium salts; and organic amine salts, such as a monoethanolamine salt and a triethanolamine salt. The "salt" may be only one kind, or may be a mixture of two or more kinds . The "salt" is more preferably an alkali metal salt, such as a sodium salt or a potassium salt, and is still more preferably a sodium salt.

As used herein, the term "(meth) acrylic" means "acrylic and/or methacrylic", the term "(meth)acrylate" means "acrylate and/or methacrylate", the term" (meth) allyl" means "allyl and/or methallyl", and the term " (meth) acrolein" means "acrolein and/or methacrolein" .

A copolymer of the present invention includes: 0.1 mol% to 99 mol% of a structural unit (A) derived from a monoethylenically unsaturated monocarboxylic acid (salt) monomer (a); 0.1 mol% to 99 mol% of a structural unit (B) derived from a monomer (b) serving as a monoethylenically unsaturated dicarboxylic acid (salt) or an anhydride thereof; and 0.1 mol% to 50 mol% of a structural unit (C) derived from an ether bond-containing hydrophobic monomer (c) .

The term "structural unit derived from a monomer" means such a structural unit that an unsaturated double bond in the monomer that is involved in a polymerization reaction is turned into a single bond by the polymerization reaction. Specifically, when the monomer is represented by "R¹R²C=CR³R⁴", the term means a structural unit represented by "-R¹R²C-CR³R⁴-" in the copolymer. For example, a structural unit derived from acrylic acid is represented by "-CH₂-CH(COOH)-", and a structural unit derived from maleic acid is represented by "-CH(COOH)-CH(COOH)-".

The monoethylenically unsaturated monocarboxylic acid (salt) monomer (a) is preferably a monoethylenically unsaturated monocarboxylic acid (salt) monomer having 3 to 8 carbon atoms. Examples of such monoethylenically unsaturated monocarboxylic acid (salt) monomer (a) include acrylic acid (salt), methacrylic acid (salt), crotonic acid (salt), isocrotonic acid (salt), and α-hydroxyacrylic acid (salt). The monoethylenically unsaturated monocarboxylic acid (salt) monomers (a) may be used alone or as a mixture thereof. The monoethylenically unsaturated monocarboxylic acid (salt) monomer (a) is preferably acrylic acid (salt) or methacrylic acid (salt), more preferably acrylic acid (salt).

The monomer (b) serving as a monoethylenically unsaturated dicarboxylic acid (salt) or an anhydride thereof is preferably a monoethylenically unsaturated dicarboxylic acid (salt) having 4 to 6 carbon atoms or an anhydride thereof. Examples of such monomer (b) serving as a monoethylenically unsaturated dicarboxylic acid (salt) or an anhydride thereof include maleic acid (salt), itaconic acid (salt), mesaconic acid (salt), fumaric acid (salt), and citraconic acid (salt). An anhydride of an acid that can have an anhydride form out of those acids is also included in the examples. The monomer (b) serving as a monoethylenically unsaturated dicarboxylic acid (salt) or an anhydride thereof may be only one kind, or may be a mixture of two or more kinds. The monomer (b) serving as a monoethylenically unsaturated dicarboxylic acid (salt) or an anhydride thereof is preferably maleic acid (salt) or maleic anhydride (salt).

The ether bond-containing hydrophobic monomer (c) is preferably represented by the general formula (1). The ether bond-containing hydrophobic monomer (c) may be only one kind, or may be a mixture of two or more kinds.

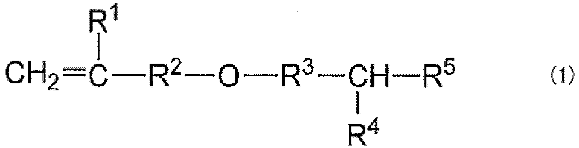

In the general formula (1), R¹ represents a hydrogen atom or a methyl group.

In the general formula (1), R² represents an alkylene group having 1 to 10 carbon atoms, preferably an alkylene group having 1 to 8 carbon atoms, more preferably an alkylene group having 1 to 5 carbon atoms, still more preferably an alkylene group having 1 to 3 carbon atoms, particularly preferably an alkylene group having 1 or 2 carbon atoms (i.e., -CH₂- or -CH₂CH₂-).

In the general formula (1), R³ represents an alkylene group having 1 to 10 carbon atoms, preferably an alkylene group having 1 to 8 carbon atoms, more preferably an alkylene group having 1 to 5 carbon atoms, still more preferably an alkylene group having 1 to 3 carbon atoms, particularly preferably an alkylene group having 1 or 2 carbon atoms, most preferably an alkylene group having 1 carbon atom (i.e., -CH₂-).

In the general formula (1), R⁴ represents a hydrogen atom or a hydroxy group.

In the general formula (1), R⁵ represents an -OR⁶ group or R⁶, and R⁶ represents an alkyl group having 1 to 20 carbon atoms, preferably an alkyl group having 1 to 18 carbon atoms, more preferably an alkyl group having 1 to 13 carbon atoms, still more preferably an alkyl group having 1 to 8 carbon atoms, particularly preferably an alkyl group having 1 to 5 carbon atoms.

The ether bond-containing hydrophobic monomer (c) is more preferably at least one kind selected from 1-allyloxy-3-butoxypropan-2-ol represented by the chemical formula (2), a hexene oxide adduct of isoprenol represented by the chemical formula (3), and allyl butyl ether represented by the chemical formula (4) .

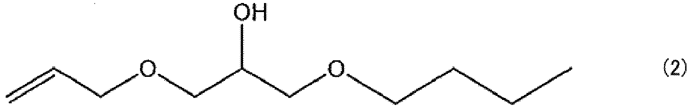

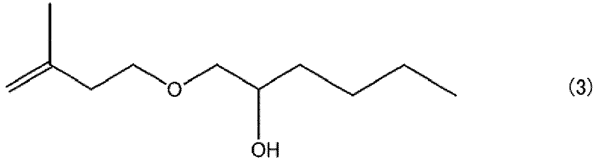

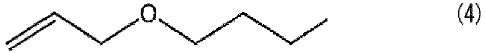

The ether bond-containing hydrophobic monomer (c) is still more preferably 1-allyloxy-3-butoxypropan-2-ol represented by the chemical formula (2) because the effects of the present invention can be further expressed.

The total content of the structural unit (A), the structural unit (B), and the structural unit (C) with respect to the total of all structural units derived from monomers in the copolymer of the present invention is preferably from 90 mol% to 100 mol%, more preferably from 95 mol% to 100 mol%, still more preferably from 98 mol% to 100 mol%, particularly preferably substantially 100 mol% (that is, the copolymer of the present invention is particularly preferably formed of the structural unit (A) derived from the monoethylenically unsaturated monocarboxylic acid (salt) monomer (a), the structural unit (B) derived from the monomer (b) serving as a monoethylenically unsaturated dicarboxylic acid (salt) or an anhydride thereof, and the structural unit (C) derived from the ether bond-containing hydrophobic monomer (c)).

The content of the structural unit (A) with respect to the total of all the structural units derived from monomers in the copolymer of the present invention is from 0.1 mol% to 99 mol%, preferably from 1 mol% to 98 mol%, more preferably from 1 mol% to 90 mol%, still more preferably from 10 mol% to 80 mol%, still more preferably from 20 mol% to 70 mol%, still more preferably from 30 mol% to 60 mol%, particularly preferably from 35 mol% to 55 mol%, most preferably from 40 mol% to 50 mol%. When the content of the structural unit (A) with respect to the total of all the structural units derived from monomers in the copolymer of the present invention is adjusted within the range, the copolymer of the present invention can express a more excellent calcium ion-trapping ability.

The content of the structural unit (B) with respect to the total of all the structural units derived from monomers in the copolymer of the present invention is from 0.1 mol% to 99 mol%, preferably from 1 mol% to 98 mol%, more preferably from 1 mol% to 90 mol%, still more preferably from 10 mol% to 80 mol%, still more preferably from 20 mol% to 70 mol%, still more preferably from 30 mol% to 60 mol%, particularly preferably from 35 mol% to 55 mol%, most preferably from 40 mol% to 50 mol%. When the content of the structural unit (B) with respect to the total of all the structural units derived from monomers in the copolymer of the present invention is adjusted within the range, the copolymer of the present invention can express a more excellent calcium ion-trapping ability.

The content of the structural unit (C) with respect to the total of all the structural units derived from monomers in the copolymer of the present invention is from 0.1 mol% to 50 mol%, preferably from 0.2 mol% to 45 mol%, more preferably from 0.3 mol% to 40 mol%, still more preferably from 0.5 mol% to 30 mol%, still more preferably from 0.8 mol% to 20 mol%, still more preferably from 1 mol% to 10 mol%, particularly preferably from 2 mol% to 8 mol%, most preferably from 3 mol% to 7 mol%. When the content of the structural unit (C) with respect to the total of all the structural units derived from monomers in the copolymer of the present invention is adjusted within the range, the copolymer of the present invention can express a more excellent calcium ion-trapping ability.

The weight-average molecular weight of the copolymer of the present invention is preferably from 1,000 to 500,000, more preferably from 1,500 to 300,000, still more preferably from 2,000 to 100,000, particularly preferably from 2,500 to 50,000, most preferably from 3, 000 to 10,000. When the weight-average molecular weight of the copolymer of the present invention is adjusted within the range, the copolymer of the present invention can express a more excellent calcium ion-trapping ability.

The copolymer of the present invention may include a structural unit (D) derived from any other monomer (d) to the extent that the effects of the present invention are not impaired. Examples of such other monomer (d) include: monoethylenically unsaturated monomers each having a sulfonic acid (salt) group, such as 3-allyloxy-2-hydroxy-1-propanesulfonic acid (salt), 3-methallyloxy-2-hydroxy-1-propanesulfonic acid (salt), vinylsulfonic acid (salt), allylsulfonic acid (salt), methallylsulfonic acid (salt), styrenesulfonic acid (salt), 2-acrylamide-2-methylpropanesulfonic acid (salt), sulfoethyl acrylate or salts thereof, sulfoethyl methacrylate or salts thereof, sulfopropyl acrylate or salts thereof, sulfopropyl methacrylate or salts thereof, and 2-hydroxy-3-butenesulfonic acid (salt); hydroxy group-containing alkyl (meth)acrylates, such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, and α-hydroxymethylethyl (meth)acrylate; alkyl (meth)acrylates each serving as an ester of (meth) acrylic acid with an alkyl group having 1 to 18 carbon atoms, such as methyl (meth)acrylate, ethyl (meth)acrylate, butyl (meth)acrylate, cyclohexyl (meth)acrylate, and lauryl (meth)acrylate; amino group-containing acrylates, such as dimethylaminoethyl (meth) acrylate or a quaternary product thereof; amide group-containing monomers, such as (meth)acrylamide, dimethylacrylamide, and isopropylacrylamide; vinyl esters, such as vinyl acetate; alkenes, such as ethylene and propylene; aromatic vinyl-based monomers, such as styrene; maleimide derivatives, such as maleimide, phenylmaleimide, and cyclohexylmaleimide; nitrile group-containing vinyl-based monomers, such as (meth)acrylonitrile; monomers each having a sulfonic acid group, such as isoprenesulfonic acid, and salts thereof; monomers each having a phosphonic acid group, such as vinylphosphonic acid and (meth) allylphosphonic acid; aldehyde group-containing vinyl-based monomers, such as (meth) acrolein; alkyl vinyl ethers, such as methyl vinyl ether, ethyl vinyl ether, and butyl vinyl ether; polyalkylene glycol chain-containing monomers each serving as a monomer having a structure formed by adding 1 mol to 300 mol of an alkylene oxide to an unsaturated alcohol, such as polyalkylene glycol (meth)acrylate, monoalkoxy polyalkylene glycol (meth)acrylate, vinyl alcohol, (meth)allyl alcohol, and isoprenol; and monomers each having any other functional group, such as vinyl chloride, vinylidene chloride, allyl alcohol, and vinylpyrrolidone. Those any appropriate other monomers (d) may be used alone or in combination thereof.

The copolymer of the present invention can express an excellent calcium ion-trapping ability. The copolymer of the present invention has a calcium ion-trapping ability of, in terms of CaCO₃-converted Ca ion amount, preferably from 150 mgCaCO₃/g to 600 mgCaCO₃/g, more preferably from 200 mgCaCO₃/g to 500 mgCaCO₃/g, still more preferably from 260 mgCaCO₃/g to 480 mgCaCO₃/g, particularly preferably from 280 mgCaCO₃/g to 470 mgCaCO₃/g, most preferably from 300 mgCaCO₃/g to 460 mgCaCO₃/g. A measurement method for the calcium ion-trapping ability is described later.

The copolymer of the present invention can be produced by any appropriate method. The copolymer of the present invention can be preferably produced by a production method to be described below.

The copolymer of the present invention can be produced by polymerizing monomer components including the monoethylenically unsaturated monocarboxylic acid (salt) monomer (a), the monomer (b) serving as a monoethylenically unsaturated dicarboxylic acid (salt) or an anhydride thereof, and the ether bond-containing hydrophobic monomer (c).

The foregoing description is applied as the description of each of the monoethylenically unsaturated monocarboxylic acid (salt) monomer (a), the monomer (b) serving as a monoethylenically unsaturated dicarboxylic acid (salt) or an anhydride thereof, and the ether bond-containing hydrophobic monomer (c).

The monomer components may include the other monomer (d) in addition to the monoethylenically unsaturated monocarboxylic acid (salt) monomer (a), the monomer (b) serving as a monoethylenically unsaturated dicarboxylic acid (salt) or an anhydride thereof, and the ether bond-containing hydrophobic monomer (c).

The foregoing description is applied as the description of the other monomer (d).

The total content of the monoethylenically unsaturated monocarboxylic acid (salt) monomer (a), the monomer (b) serving as a monoethylenically unsaturated dicarboxylic acid (salt) or an anhydride thereof, and the ether bond-containing hydrophobic monomer (c) in the monomer components is preferably from 90 mol% to 100 mol%, more preferably from 95 mol% to 100 mol%, still more preferably from 98 mol% to 100 mol%, particularly preferably substantially 100 mol% (that is, the monomer components are particularly preferably formed of the monoethylenically unsaturated monocarboxylic acid (salt) monomer (a), the monomer (b) serving as a monoethylenically unsaturated dicarboxylic acid (salt) or an anhydride thereof, and the ether bond-containing hydrophobic monomer (c)).

The content of the monoethylenically unsaturated monocarboxylic acid (salt) monomer (a) in the monomer components is preferably from 0.1 mol% to 99 mol%, more preferably from 1 mol% to 90 mol%, still more preferably from 10 mol% to 80 mol%, still more preferably from 20 mol% to 70 mol%, still more preferably from 30 mol% to 60 mol%, particularly preferably from 35 mol% to 55 mol%, most preferably from 40 mol% to 50 mol%. When the content of the monoethylenically unsaturated monocarboxylic acid (salt) monomer (a) in the monomer components is adjusted within the range, the copolymer of the present invention can express a more excellent calcium ion-trapping ability.

The content of the monomer (b) serving as a monoethylenically unsaturated dicarboxylic acid (salt) or an anhydride thereof in the monomer components is preferably from 0.1 mol% to 99 mol%, more preferably from 1 mol% to 90 mol%, still more preferably from 10 mol% to 80 mol%, still more preferably from 20 mol% to 70 mol%, still more preferably from 30 mol% to 60 mol%, particularly preferably from 35 mol% to 55 mol%, most preferably from 40 mol% to 50 mol%. When the content of the monomer (b) serving as a monoethylenically unsaturated dicarboxylic acid (salt) or an anhydride thereof in the monomer components is adjusted within the range, the copolymer of the present invention can express a more excellent calcium ion-trapping ability.

The content of the ether bond-containing hydrophobic monomer (c) in the monomer components is preferably from 0.1 mol% to 50 mol%, more preferably from 0.3 mol% to 40 mol%, still more preferably from 0.5 mol% to 30 mol%, still more preferably from 0.8 mol% to 20 mol%, still more preferably from 1 mol% to 10 mol%, particularly preferably from 2 mol% to 8 mol%, most preferably from 3 mol% to 7 mol%. When the content of the ether bond-containing hydrophobic monomer (c) in the monomer components is adjusted within the range, the copolymer of the present invention can express a more excellent calcium ion-trapping ability.

Any appropriate polymerization method may be adopted as a polymerization method that can be adopted at the time of the production of the copolymer of the present invention. Such polymerization method is, for example, a method involving performing the polymerization in an aqueous solvent in the presence of a polymerization initiator, and in some cases, through the use of a chain transfer agent.

A solvent that can be used at the time of the production of the copolymer of the present invention is preferably an aqueous solvent. Examples of the aqueous solvent include water, an alcohol, a glycol, glycerin, and polyethylene glycol. Of those, water is preferred. In order that the solubility of each of the monomers in the solvent may be improved, any appropriate organic solvent may be appropriately added as required to the extent that no adverse effects are exhibited on the polymerization. Examples of such organic solvent include: lower alcohols, such as methanol, ethanol, and isopropyl alcohol; lower ketones, such as acetone, methyl ethyl ketone, and diethyl ketone; ethers, such as dimethyl ether, diethyl ether, and dioxane; and amides, such as dimethyl formaldehyde. Those solvents may be used alone or in combination thereof.

The usage amount of the solvent that can be used at the time of the production of the copolymer of the present invention is preferably from 80 mass% to 400 mass%, more preferably from 150 mass% to 300 mass%, still more preferably from 200 mass% to 250 mass% with respect to the total amount of the monomer components. When the usage amount of the solvent is less than 80 mass% with respect to the total amount of the monomer components, the following problem may occur: the viscosity of the mixture of the components increases during the polymerization to make the mixing insufficient, and hence gel is produced. When the usage amount of the solvent is more than 400 mass% with respect to the total amount of the monomer components, a problem in that it becomes difficult to obtain a copolymer having a desired molecular weight may occur.

Most, or the total amount, of the solvent only needs to be loaded into a reaction vessel at the initial stage of the polymerization. For example, part of the solvent may be adequately added (dropped) alone into a reaction system during the polymerization. Alternatively, after the monomers, the polymerization initiator, the chain transfer agent, and any other additive have been dissolved in the solvent in advance, the solvent may be adequately added (dropped) into the reaction system during the polymerization together with the components.

Any appropriate polymerization initiator can be adopted as the polymerization initiator to the extent that the effects of the present invention are not impaired. Examples of such polymerization initiator include: hydrogen peroxide; persulfates, such as sodium persulfate, potassium persulfate, and ammonium persulfate; azo-based compounds, such as dimethyl-2,2'-azobis(2-methyl propionate), 2,2'-azobis(isobutyronitrile), 2,2'-azobis(2-methylbutyronitrile), 2,2'-azobis(2,4-dimethylvaleronitrile), 2,2'-azobis(4-methoxy-2,4-dimethylvaleronitrile), dimethyl 2,2'-azobis(isobutyrate), 4,4'-azobis(4-cyanovaleric acid), 2,2'-azobis(2-methylpropionamidine) dihydrochloride, 2,2'-azobis[N-(2-carboxyethyl)-2-methylpropionamidine] n-hydrate, 2,2'-azobis[2-(2-imidazolin-2-yl)propane] dihydrochloride, 2,2'-azobis[2-(2-imidazolin-2-yl)propane] disulfatedihydrate, and 1,1'-azobis(cyclohexane-1-carbonitrile); and organic peroxides, such as benzoyl peroxide, lauroyl peroxide, peracetic acid, di-t-butyl peroxide, and cumene hydroperoxide. Of those polymerization initiators, persulfates, such as sodium persulfate, potassium persulfate, and ammonium persulfate, are preferred because the effects of the present invention can be sufficiently expressed.

The polymerization initiators may be used alone or in combination thereof.

Any appropriate amount can be adopted as the usage amount of the polymerization initiator as long as the amount enables appropriate initiation of the copolymerization reaction. For example, such amount is preferably 15 g or less, more preferably from 1 g to 12 g in terms of sodium persulfate with respect to 1 mol of the total amount of the monomers. In addition, when a maleic acid ratio is set to 20 mol% or more in the case of the production of the copolymer of the present invention, for example, the usage amount in terms of hydrogen peroxide is preferably 20 g or less, more preferably from 1 g to 15 g with respect to 1 mol of the total amount of the monomers. The polymerization initiator is more preferably used in combination with an iron catalyst.

In the production of the copolymer of the present invention, a chain transfer agent may be used as required for the purpose of, for example, adjusting the molecular weight of the copolymer to be obtained to the extent that the copolymerization reaction is not adversely affected.

Any appropriate chain transfer agent can be adopted as the chain transfer agent to the extent that the effects of the present invention are not impaired. Examples of such chain transfer agent include: thiol-based chain transfer agents, such as mercaptoethanol, thioglycerol, thioglycolic acid, 2-mercaptopropionic acid, 3-mercaptopropionic acid, thiomalic acid, octyl thioglycolate, octyl 3-mercaptopropionate, 2-mercaptoethanesulfonic acid, n-dodecylmercaptan, octylmercaptan, and butyl thioglycolate; halides, such as carbon tetrachloride, methylene chloride, bromoform, and bromotrichloroethane; secondary alcohols, such as isopropanol and glycerin; and lower oxides and salts thereof, such as phosphorous acid, hypophosphorous acid, and salts thereof (e.g., sodium hypophosphite and potassium hypophosphite), and sulfurous acid, bisulfurous acid, dithionous acid, metabisulfurous acid, and salts thereof (e.g., sodium bisulfite, potassium bisulfite, ammonium bisulfite, sodium dithionite, potassium dithionite, sodium metabisulfite, and potassium metabisulfite). Of those chain transfer agents, bisulfites, such as sodium bisulfite, potassium bisulfite, and ammoniumbisulfite, are preferred because the effects of the present invention can be sufficiently expressed.

The chain transfer agents may be used alone or in combination thereof.

The use of the chain transfer agent has the following advantages: the molecular weight of the copolymer to be produced can be suppressed from increasing more than necessary; and a low-molecular weight copolymer can be efficiently produced.

Any appropriate amount can be adopted as the usage amount of the chain transfer agent as long as the amount enables appropriate progress of the copolymerization reaction of the monomers. For example, such amount is preferably from 0.5 g to 20 g, more preferably from 1 g to 15 g, still more preferably from 2 g to 10 g in terms of sodium bisulfite with respect to 1 mol of the total amount of the monomers.

In the production of the copolymer of the present invention, a combination of one or more kinds each of persulfates and bisulfites is preferably used as a combination of the polymerization initiator and the chain transfer agent (also referred to as "initiator system") because the effects of the present invention can be expressed in a more sufficient manner.

Specific examples of the persulfate include sodium persulfate, potassium persulfate, and ammonium persulfate.

Specific examples of the bisulfite include sodium bisulfite, potassium bisulfite, and ammonium bisulfite.

With regard to a usage ratio when the persulfate and the bisulfite are used in combination, the amount of the bisulfite is preferably from 0.1 part by mass to 5 parts by mass, more preferably from 0.2 part by mass to 3 parts by mass, still more preferably from 0.2 part by mass to 2 parts by mass with respect to 1 part by mass of the persulfate. When the amount of the bisulfite is less than 0.1 part by mass with respect to 1 part by mass of the persulfate, an effect exhibited by the bisulfite may reduce. Accordingly, it may be difficult to express the effects of the present invention in a more sufficient manner. In addition, when the amount of the bisulfite is less than 0.1 part by mass with respect to 1 part by mass of the persulfate, the weight-average molecular weight of the (meth)acrylic acid-based copolymer to be obtained may become excessively high. When the amount of the bisulfite is more than 5 parts by mass with respect to 1 part by mass of the persulfate, an effect exhibited by the bisulfite commensurate with the usage ratio may not be obtained and the bisulfite maybe excessively supplied (wastefully consumed) in a polymerization reaction system. Accordingly, an excess amount of the bisulfite may be decomposed in the polymerization reaction system to produce a large amount of a sulfurous acid gas. In addition, when the amount of the bisulfite is more than 5 parts by mass with respect to 1 part by mass of the persulfate, a large amount of impurities may be produced and hence the performance of the copolymer to be obtained may reduce. In addition, when the amount of the bisulfite is more than 5 parts by mass with respect to 1 part by mass of the persulfate, impurities maybe liable to deposit upon low-temperature holding of the copolymer to be obtained.

With regard to a usage amount when the persulfate and the bisulfite are used in combination, the total amount of the persulfate and the bisulfite is preferably from 1 g to 20 g, more preferably from 2 g to 15 g, still more preferably from 3 g to 11 g, particularly preferably from 4 g to 8 g in terms of sodium persulfate and sodium bisulfite with respect to 1 mol of the total amount of the monomers. When the total amount of the persulfate and the bisulfite is less than 1 g in terms of sodium persulfate and sodium bisulfite with respect to 1 mol of the total amount of the monomers, it may be difficult to express the effects of the present invention in a more sufficient manner, and the weight-average molecular weight of the copolymer to be obtained may become excessively high. When the total amount of the persulfate and the bisulfite is more than 20 g with respect to 1 mol of the total amount of the monomers, an effect exhibited by the persulfate and the bisulfite commensurate with their usage amounts may not be obtained, and the purity of the copolymer to be obtained may reduce. In addition, impurities may be liable to deposit upon low-temperature holding of the copolymer to be obtained.

The persulfate may be added in the form of a persulfate solution (preferably a persulfate aqueous solution) by being dissolved in a solvent to be described later (preferably water). The concentration of the persulfate when the persulfate is used as such persulfate solution (preferably the persulfate aqueous solution) is preferably from 1 mass% to 35 mass%, more preferably from 5 mass% to 30 mass%, still more preferably from 10 mass% to 20 mass%. When the concentration of the persulfate solution (preferably the persulfate aqueous solution) is less than 1mass%, the transportation and storage of the solution may become complicated. When the concentration of the persulfate solution (preferably the persulfate aqueous solution) is more than 35 mass%, the solution may become difficult to handle.

The bisulfite may be added in the form of a bisulfite solution (preferably a bisulfite aqueous solution) by being dissolved in a solvent to be described later (preferably water). The concentration of the bisulfite when the bisulfite is used as such bisulfite solution (preferably the bisulfite aqueous solution) is preferably from 10 mass% to 42 mass%, more preferably from 20 mass% to 41 mass%, still more preferably from 32 mass% to 40 mass%. When the concentration of the bisulfite solution (preferably the bisulfite aqueous solution) is less than 10 mass%, the transportation and storage of the solution may become complicated. When the concentration of the bisulfite solution (preferably the bisulfite aqueous solution) is more than 42 mass%, the solution may become difficult to handle.

A continuous loading method, such as dropping or separate loading, can be applied as a method of adding the polymerization initiator and the chain transfer agent to a reaction vessel. In addition, the chain transfer agent may be introduced alone into the reaction vessel, or may be mixed in advance with, for example, the respective monomers constituting the monomer components and a solvent.

In the production of the copolymer of the present invention, at the time of the polymerization reaction, any appropriate other additive can be used in the polymerization reaction system to the extent that the effects of the present invention are not impaired. Examples of such other additive include a reaction accelerator, a heavy metal concentration adjustor, and a pH adjustor. The reaction accelerator is used for the purpose of, for example, reducing the usage amount of the polymerization initiator or the like. The heavy metal concentration adjustor is used for the purpose of, for example, alleviating an influence on the polymerization reaction occurring when a metal is eluted in a trace amount from the reaction vessel or the like. The pH adjustor is used for the purposes of, for example, improving the efficiency of the polymerization reaction, and preventing the occurrence of a sulfurous acid gas and the corrosion of an apparatus when the bisulfite is used as the initiator system.

For example, a heavy metal compound can be utilized as the reaction accelerator. Specific examples thereof can include: water-soluble polyvalent metal salts, such as vanadium oxytrichloride, vanadium trichloride, vanadyl oxalate, vanadyl sulfate, vanadic anhydride, ammonium metavanadate, ammonium hypovanadous sulfate [(NH₄) ₂SO₄·VSO₄·6H₂O] , ammonium vanadous sulfate [(NH₄)V (SO₄)₂·12H₂O] , copper(II) acetate, copper (II), copper(II) bromide, copper(II) acetylacetate, cupric ammonium chloride, copper ammonium chloride, copper carbonate, copper(II) chloride, copper(II) citrate, copper(II) formate, copper(II) hydroxide, copper nitrate, copper naphthenate, copper(II) oleate, copper maleate, copper phosphate, copper(II) sulfate, cuprous chloride, copper (I) cyanide, copper iodide, copper (I) oxide, copper thiocyanate, iron acetylacetonate, iron ammonium citrate, ferric ammonium oxalate, iron ammonium sulfate, Mohr's salt, ferric ammonium sulfate, iron citrate, iron fumarate, iron maleate, ferrous lactate, ferric nitrate, iron pentacarbonyl, ferric phosphate, and ferric pyrophosphate; polyvalent metal oxides, such as vanadium pentaoxide, copper(II) oxide, ferrous oxide, and ferric oxide; polyvalent metal sulfides, such as iron(III) sulfide, iron(II) sulfide, and copper sulfide; copper powder; and iron powder. The reaction accelerators may be used alone or in combination thereof.

A polyvalent metal compound or simple substance can be utilized as the heavy metal concentration adjustor. Specific examples thereof can include: water-soluble polyvalent metal salts, such as vanadium oxytrichloride, vanadium trichloride, vanadyl oxalate, vanadyl sulfate, vanadic anhydride, ammonium metavanadate, ammonium hypovanadous sulfate [(NH₄)₂SO₄·VSO₄·6H₂O] , ammonium vanadous sulfate [(NH₄)V(SO₄)₂·12H₂O] , copper(II) acetate, copper (II), copper(II) bromide, copper(II) acetylacetate, cupric ammonium chloride, copper ammonium chloride, copper carbonate, copper(II) chloride, copper(II) citrate, copper(II) formate, copper(II) hydroxide, copper nitrate, copper naphthenate, copper(II) oleate, copper maleate, copper phosphate, copper(II) sulfate, cuprous chloride, copper (I) cyanide, copper iodide, copper (I) oxide, copper thiocyanate, iron acetylacetonate, iron ammonium citrate, ferric ammonium oxalate, iron ammonium sulfate, Mohr's salt, ferric ammonium sulfate, iron citrate, iron fumarate, iron maleate, ferrous lactate, ferric nitrate, iron pentacarbonyl, ferric phosphate, and ferric pyrophosphate; polyvalent metal oxides, such as vanadium pentaoxide, copper(II) oxide, ferrous oxide, and ferric oxide; polyvalent metal sulfides, such as iron(III) sulfide, iron(II) sulfide, and copper sulfide; copper powder; and iron powder. The heavy metal concentration adjustors may be used alone or in combination thereof.

Examples of the pH adjustor include: hydroxides of alkali metals, such as sodium hydroxide and potassium hydroxide; hydroxides of alkaline earth metals, such as calcium hydroxide and magnesium hydroxide; and organic amine salts, such as ammonia, monoethanolamine, and triethanolamine. Of those, hydroxides of alkali metals, such as sodium hydroxide and potassium hydroxide, are preferred, and sodium hydroxide is particularly preferred. The pH adjustor is sometimes referred to as "neutralizer". The pH adjustors may be used alone or in combination thereof.

In the production of the copolymer of the present invention, the polymerization temperature of the polymerization reaction can be set to any appropriate temperature to the extent that the effects of the present invention are not impaired. A lower limit for the polymerization temperature is preferably 50°C or more, more preferably 70°C or more, and an upper limit for the polymerization temperature is preferably 99°C or less, more preferably 95°C or less because the copolymer can beefficiently produced. In addition, the upper limit for the polymerization temperature may be set to any appropriate temperature equal to or lower than the boiling point of a polymerization reaction solution.

In the production of the copolymer of the present invention, when a method in which the polymerization is initiated from room temperature (room temperature initiation method) is adopted, e.g., when the polymerization is performed within 240 minutes per batch (180-minute formulation), the temperature of the reaction system is caused to reach a preset temperature, which falls within the range of the polymerization temperature, and is preferably from 70°C to 95°C, more preferably from 80°C to 90°C, within preferably from 0 minutes to 70 minutes, more preferably from 0 minutes to 50 minutes, still more preferably from 0 minutes to 30 minutes. After that, the preset temperature is preferably maintained till the end of the polymerization.

In the production of the copolymer of the present invention, a pressure in the reaction system can be set to any appropriate pressure to the extent that the effects of the present invention are not impaired. Examples of such pressure include normal pressure (atmospheric pressure), reduced pressure, and increased pressure.

In the production of the copolymer of the present invention, an atmosphere in the reaction system can be set to any appropriate atmosphere to the extent that the effects of the present invention are not impaired. Examples of such atmosphere include an air atmosphere and an inert gas atmosphere.

In the production of the copolymer of the present invention, the polymerization reaction of the monomers is preferably performed under an acidic condition. When the polymerization reaction is performed under the acidic condition, an increase in viscosity of the solution in the polymerization reaction system can be suppressed, and hence a low-molecular weight copolymer can be satisfactorily produced. Moreover, the polymerization reaction can be advanced under a higher concentration condition than a conventional one, and hence the production efficiency of the copolymer can be significantly improved. For example, when a degree of neutralization during the polymerization is adjusted to fall within the range of from 0 mol% to 50 mol%, an effect exhibited by a reduction in amount of the polymerization initiator can be synergistically increased, and hence a reducing effect on the amount of impurities can be markedly increased. Further, the pH of the reaction solution during the polymerization at 25°C is preferably adjusted to fall within the range of from 1 to 6. When the polymerization reaction is performed under such acidic condition, the polymerization can be performed at a high concentration and in one stage. Accordingly, a concentrating step that has been necessary in some cases in a related-art production method can be omitted. Therefore, the productivity of the copolymer significantly improves and an increase in production cost therefor can be suppressed.

The pH of the reaction solution during the polymerization at 25°C preferably falls within the range of from 1 to 6, more preferably falls within the range of from 1 to 5, and still more preferably falls within the range of from 1 to 4. When the pH of the reaction solution during the polymerization at 25°C is less than 1, a sulfurous acid gas or the corrosion of the apparatus may occur in, for example, the case where the bisulfite is used as the initiator system. When the pH of the reaction solution during the polymerization at 25°C is more than 6, in the case where the bisulfite is used as the initiator system, the efficiency with which the bisulfite is used may reduce and hence the molecular weight of the copolymer may increase.

For example, the pH adjustor only needs to be used in the adjustment of the pH of the reaction solution during the polymerization at 25°C.

The degree of neutralization during the polymerization preferably falls within the range of from 0 mol% to 50 mol%, more preferably falls within the range of from 1 mol% to 25 mol%, and still more preferably falls within the range of from 2 mol% to 20 mol%. When the degree of neutralization during the polymerization falls within such range, the monomers can be satisfactorily copolymerized and hence the amount of impurities can be reduced. In particular, the degree of neutralization is more preferably set within the range of from 3 mol% to 15 mol% for the purpose of reducing the amount of an unreacted impurity after the polymerization of the ether bond-containing hydrophobic monomer (c). In addition, the viscosity of the solution in the polymerization reaction system is prevented from increasing, and hence a low-molecular weight copolymer can be satisfactorily produced. Moreover, the polymerization reaction can be advanced under a higher concentration condition than the conventional one, and hence the production efficiency can be significantly improved.

Any appropriate method can be adopted as a method for neutralization to the extent that the effects of the present invention are not impaired. For example, a (meth)acrylate, such as sodium (meth) acrylate, may be used as part of the raw materials, a hydroxide of an alkali metal, such as sodium hydroxide, may be used as the neutralizer to perform the neutralization during the polymerization, or the (meth) acrylate and the hydroxide may be used in combination. In addition, with regard to the addition form of the neutralizer at the time of the neutralization, the neutralizer may be added in the form of a solid, or may be added in the form of an aqueous solution prepared by dissolving the neutralizer in a proper solvent (preferably water).

When the polymerization reaction is performed with the neutralizer in the form of an aqueous solution, the concentration of the aqueous solution is preferably from 10 mass% to 60 mass%, more preferably from 20 mass% to 55 mass%, still more preferably from 30 mass% to 50 mass%. When the concentration of the aqueous solution is less than 10 mass%, the transportation and storage of the solution may become complicated. When the concentration of the aqueous solution is more than 60 mass%, the solution may become difficult to handle.

At the time of the polymerization, the following is preferably adopted. The monomers, the polymerization initiator, and the chain transfer agent, and as required, the other additive are dissolved in advance in a proper solvent (preferably a solvent of the same kind as that of a solvent for a liquid to be dropped) to prepare a solution of the monomers, a solution of the polymerization initiator, and a solution of the chain transfer agent, and as required, a solution of the other additive, and the polymerization is performed while each of the solutions is continuously dropped to a solvent loaded into the reaction vessel (regulated to a predetermined temperature as required) over a predetermined dropping time. Further, part of the solvent may be dropped later separately from the initially loaded solvent that has been loaded in advance into the vessel in the reaction system. With regard to a dropping method, each solution may be continuously dropped, or may be intermittently dropped in several portions. In addition, part or the whole amount of one or two or more kinds of the monomers may be initially loaded. In addition, the rate at which one or two or more kinds of the monomers are dropped may be always constant during a time period from the initiation of the dropping to its end, or the dropping rate may be changed with time in accordance with, for example, the polymerization temperature. In addition, there is no need to drop all dropping components in the same manner, and the time point when the dropping is initiated or the time point when the dropping is ended may be shifted from dropping component to dropping component, or a dropping time may be shortened or lengthened from dropping component to dropping component. In addition, when the respective components are dropped in solution forms, each of the dropping solutions may be warmed to a temperature comparable to the polymerization temperature in the reaction system. With such procedure, when the polymerization temperature is kept constant, a temperature fluctuation is reduced and hence temperature control becomes easy.

When the bisulfite is used as the initiator system, the bisulfite causes the weight-average molecular weight of the copolymer at the initial stage of the polymerization to affect the final weight-average molecular weight. Accordingly, in order to reduce the weight-average molecular weight of the copolymer at the initial stage of the polymerization, the bisulfite or a solution thereof is added (dropped) at from 5 mass% to 35 mass% preferably within 60 minutes, more preferably within 30 minutes, still more preferably within 10 minutes from the time point when the polymerization is initiated.

When the bisulfite is used as the initiator system, the time point when the dropping of the bisulfite or the solution thereof is ended is made earlier than the time point when the dropping of the monomers is ended by preferably from 1 minute to 30 minutes, more preferably from 1 minute to 20 minutes, still more preferably from 1 minute to 15 minutes. Thus, the amount of the bisulfite remaining after the end of the polymerization can be reduced, and hence the occurrence of a sulfurous acid gas and the formation of impurities due to such remaining bisulfite can be significantly and effectively suppressed.

When the persulfate is used as the initiator system, the time point when the dropping of the persulfate or a solution thereof is ended is delayed from the time point when the dropping of the monomers is ended by preferably from 1 minute to 60 minutes, more preferably from 1 minute to 45 minutes, still more preferably from 1 minute to 20 minutes. Thus, the amount of a monomer remaining after the end of the polymerization can be reduced and hence the amount of impurities resulting from such remaining monomer can be reduced.

A total dropping time at the time of the polymerization is preferably from 150 minutes to 600 minutes, more preferably from 180 minutes to 450 minutes, still more preferably from 210 minutes to 300 minutes . When the total dropping time is less than 150 minutes, the weight-average molecular weight of the copolymer to be obtained may become excessively high. In addition, an excess amount of the bisulfite may be decomposed to produce a sulfurous acid gas. When the total dropping time is more than 600 minutes, the productivity of the (meth) acrylic acid-based copolymer to be obtained may reduce . The term "total dropping time" as used herein refers to a time period from the time point when the dropping of the first dropping component (which is not necessarily one component) is initiated to the time point when the dropping of the final dropping component (which is not necessarily one component) is completed.

A solid content concentration in the polymerization solution at the time point when the polymerization reaction is ended is preferably 35 mass% or more, more preferably from 40 mass% to 70 mass%, still more preferably from 45 mass% to 65 mass%. When the solid content concentration in the polymerization solution at the time point when the polymerization reaction is ended is 35 mass% or more, the polymerization can be performed at a high concentration and in one stage. Accordingly, a low-molecular weight (meth) acrylic acid-based copolymer can be efficiently obtained. For example, the concentrating step that has been necessary in some cases in the related-art production method can be omitted, and hence the production efficiency can be improved. As a result, the productivity of the copolymer improves and an increase in production cost therefor can be suppressed. Herein, the time point when the polymerization reaction is ended, which may be the time point when the dropping of all dropping components is ended, preferably means the time point when a predetermined aging time elapses after the dropping (time point when the polymerization is completed).

In the production of the copolymer of the present invention, an aging step of aging the polymerization reaction solution may be provided in order to effectively complete the polymerization after the end of the polymerization reaction. An aging time in the aging step is preferably from 1 minute to 120 minutes, more preferably from 5 minutes to 90 minutes, still more preferably from 10 minutes to 60 minutes in order to effectively complete the polymerization. The polymerization temperature is preferably applied to a temperature in the aging step. When the aging step is present in the production of the copolymer of the present invention, the polymerization time means the sum of the total dropping time and the aging time.

The copolymer of the present invention can find use in, for example, a water treatment agent, a fiber treatment agent, a dispersant, a scale inhibitor (scale control chemical), a metal ion-sequestering agent, athickener, various binders, an emulsifying agent, a detergent, a skin care agent, a hair care agent, and a deodorant.

### Examples

The present invention is specifically described below by way of Examples, but the present invention is not limited to these Examples . "Part(s)" means "part(s) by mass" and "%" means "mass%" unless otherwise specified.

### <Measurement Conditions (GPC) for Weight-average Molecular Weight>

The measurement of a weight-average molecular weight was performed under the following conditions using gel permeation chromatography (GPC).
Apparatus: L-7000 series manufactured by Hitachi, Ltd.
Detector: HITACHI RI Detector L-7490
Column: SHODEXAsahipakGF-310-HQ, GF-710-HQ, GF-1G7B, manufactured by Showa Denko K.K.
Column temperature: 40°C
Flow rate: 0.5 ml/min
Calibration curve: Polyacrylic acid standard manufactured by Sowa Science Corporation
Eluent: 0.1 N sodium acetate/acetonitrile=3/1 (mass ratio)

### <Quantification of Monomer>

The quantification of a monomer was performed under the following conditions using liquid chromatography.
Measurement apparatus: L-7000 series manufactured by Hitachi, Ltd.
Detector: UV detector L-7400 manufactured by Hitachi, Ltd.
Column: SHODEX RSpak DE-413 manufactured by Showa Denko K.K.
Temperature: 40.0°C
Eluent: 0.1% phosphoric acid aqueous solution
Flow rate: 1.0 ml/min

### <Measurement of Concentration of 3-Sulfone Propionic Acid (3SPA)>

The concentration of 3-sulfone propionic acid (3SPA) was measured under the following conditions.
Apparatus: Gradient HPLC System manufactured by Waters
Column: TSK-GEL ODS-100V 5 µm 4.6×250 mm two series
Eluent: 0.02 M potassium dihydrogen phosphate (pH was adjusted to 2.5)
Flow rate: 0.7 mL/min
Temperature: 30°C
Detector: UV detector (210 nm)

### <Method of measuring Solid Content>

A drying treatment was performed by leaving a copolymer (1.0 g of the copolymer with 1.0 g of water added thereto) to stand in an oven heated to 120°C for 2 hours . A solid content (%) andavolatile component (%) were calculated from a change in mass of the copolymer after the drying relative to its mass before the drying.

### <Measurement of Calcium Ion-trapping Ability>

50 Grams of a 0.001 mol/L aqueous solution of calcium chloride was collected in a beaker having a volume of 100 cc, and 10 mg of an aqueous solution of a copolymer in terms of a solid content was added thereto. Next, the pH of the resultant aqueous solution was adjusted to from 9 to 11 with dilute sodium hydroxide. After that, 1 ml of a 4 mol/L aqueous solution of potassium chloride was added as a calcium ion electrode stabilizer thereto under stirring. The amount of a free calcium ion was measured with a titrator (AUTO TITRATOR COM-1700 manufactured by Hiranuma Sangyo Co., Ltd.) and a calcium ion composite electrode (ORION 9720BNWP), and the number of milligrams of a captured calcium ion per 1 g of the copolymer in terms of calcium carbonate was determined by calculation. The unit of a calcium ion-trapping ability is "mgCaCO₃/g".

### [Example 1]

### (1) Synthesis of Monomer

370.0 Grams of n-butyl alcohol and 4.27 g of pellet-shaped sodium hydroxide were loaded into a four-necked glass flask having a volume of 500 mL, the flask including a reflux condenser and a stirrer (paddle blade), and the temperature of the mixture was increased to 60°C while the mixture was stirred. Next, 57.0 g of allyl glycidyl ether (hereinafter sometimes referred to as "AGE") was added to the mixture over 30 minutes, and then the whole was subjected to a reaction for 5 hours. The resultant solution was transferred to a 1,000-milliliter recovery flask, and the solvent was removed with a rotary evaporator. 200.0 Grams of a 20 mass% aqueous solution of sodium chloride was added to the residue, and the resultant aqueous solution was transferred to a 500-milliliter separating funnel, followed by sufficient shaking. After that, the solution was left at rest until the solution underwent layer separation, and a lower layer was removed. The remaining upper layer was transferred to a 300-milliliter recovery flask, and the solvent was removed with a rotary evaporator . Aprecipitated salt was removed by filtration. Thus, a monomer (1) was obtained.

### (2) Polymerization

127.0 Grams of pure water, 0.0043 g of Mohr's salt, and 127.5 g of maleic anhydride were loaded into a glass separable flask having a volume of 1,000 mL, the flask including a reflux condenser and a stirrer (paddle blade), and 160.1 g of a 48% aqueous solution of sodium hydroxide (hereinafter sometimes referred to as "48% NaOH") was loaded from a dropping funnel into the flask over 30 minutes while the mixture was stirred. While the mixture was stirred, its temperature was increased to 103°C, and boiling reflux was observed. Thus, a polymerization reaction system was obtained. Next, under stirring, the droppings of 117.1 g of an 80% aqueous solution of acrylic acid (hereinafter sometimes referred to as "80% AA"), 25.8 g of the monomer (1), 43.8 g of a 15% aqueous solution of sodium persulfate (hereinafter sometimes referred to as "15% NaPS"), and 15.6 g of 35% hydrogen peroxide water (hereinafter sometimes referred to as "35% H₂O₂") from nozzles different from one another into the polymerization reaction system held at a boiling point (105°C) were simultaneously initiated. Thus, polymerization was initiated. The dropping times of the respective solutions were as follows: the 80% AA was dropped for 120 minutes; the monomer (1) was dropped for 90 minutes; the 15% NaPS was dropped for 120 minutes; and the 35% H₂O₂ was dropped for 120 minutes. In addition, the dropping rates of the respective solutions were made constant, and the droppings of the respective solutions were continuously performed.

After the completion of the dropping of the 80%AA, the reaction solution was further held (aged) at a boiling point (102°C) for 30 minutes. Thus, the polymerization was completed. After the completion of the polymerization, the polymerization reaction liquid was stirred and left to cool.

Thus, a copolymer aqueous solution (1) containing a copolymer (1) and having a solid content concentration of 56% was obtained. The weight-average molecular weight of the copolymer (1) was 4, 000.

The results are shown in Table 1.

### [Example 2]

### (1) Synthesis of Monomer

A monomer (1) was obtained in the same manner as in Example 1.

### (2) Polymerization

127.0 Grams of pure water and 127.5 g of maleic anhydride were loaded into a glass separable flask having a volume of 1,000 mL, the flask including a reflux condenser and a stirrer (paddle blade) , and 60.7 g of a 48% aqueous solution of sodium hydroxide (hereinafter sometimes referred to as "48% NaOH") was loaded from a dropping funnel into the flask over 30 minutes while the mixture was stirred. While the mixture was stirred, its temperature was increased to 90°C, and boiling reflux was observed. Thus, a polymerization reaction system was obtained. Next, under stirring, the droppings of 439.1 g of an 80% aqueous solution of acrylic acid (hereinafter sometimes referred to as "80% AA"), 61.2 g of the monomer (1), 260 g of a 15% aqueous solution of sodium persulfate (hereinafter sometimes referred to as "15% NaPS"), and 160 g of a 35% aqueous solution of sodium hydrogen sulfite (hereinafter sometimes referred to as "35% SBS") from nozzles different from one another into the polymerization reaction system held at 90°C were simultaneously initiated. Thus, polymerization was initiated. The dropping times of the respective solutions were as follows: the 80% AA was dropped for 120 minutes; the monomer (1) was dropped for 90 minutes; the 15% NaPS was dropped for 150 minutes; and the 35% SBS was dropped for 110 minutes. In addition, the dropping rates of the respective solutions were made constant, and the droppings of the respective solutions were continuously performed.

After the completion of the dropping of the 80% AA, the reaction solution was further held (aged) at a boiling point (102°C) for 60 minutes. Thus, the polymerization was completed. After the completion of the polymerization, the polymerization reaction liquid was stirred and left to cool.

After the cooling, 250.8 g of the 48% NaOH was dropped to perform neutralization. Thus, a copolymer aqueous solution (2) containing a copolymer (2) and having a solid content concentration of 48.4% was obtained. The weight-average molecular weight of the copolymer (2) was 5,200.

The results are shown in Table 1.

### [Comparative Example 1]: Sodium Polyacrylate

146.8 Grams of pure water and 0.0186 g of Mohr's salt were loaded into a glass separable flask having a volume of 1,000 mL, the flask including a reflux condenser and a stirrer (paddle blade) , and the temperature of the mixture was increased to 85°C while the mixture was stirred. Thus, a polymerization reaction system was obtained. Next, under stirring, 270.0 g of 80% AA, 12.5 g of 48% NaOH, 40 g of 15% NaPS, and 30 g of 35% SBS were dropped from nozzles different from one another into the polymerization reaction system held at 85°C. The dropping times of the respective solutions were as follows: the 80% AA and the 48% NaOH were each dropped for 180 minutes; the 15% NaPS was dropped for 190 minutes; and the 35% SBS was dropped for 175 minutes. In addition, the dropping rates of the respective solutions were made constant, and the droppings of the respective solutions were continuously performed.

After the completion of the dropping of the 80%AA, the reaction solution was further held (aged) at 85°C for 30 minutes. Thus, the polymerization was completed. After the completion of the polymerization, while the polymerization reaction liquid was stirred and left to cool, 197.5 g of the 48% NaOH was gradually dropped to neutralize the polymerization reaction liquid.

Thus, a polymer aqueous solution (C1) containing a polymer (C1) and having a solid content concentration of 45% was obtained. The weight-average molecular weight of the polymer (C1) was 5,000.

The results are shown in Table 1.

### [Comparative Example 2]: Sodium Polyacrylate

146.8 Grams of pure water and 0.0186 g of Mohr's salt were loaded into a glass separable flask having a volume of 1,000 mL, the flask including a reflux condenser and a stirrer (paddle blade) , and the temperature of the mixture was increased to 85°C while the mixture was stirred. Thus, a polymerization reaction system was obtained. Next, under stirring, 270.0 g of 80% AA, 12.5 g of 48% NaOH, 40 g of 15% NaPS, and 70 g of 35% SBS were dropped from nozzles different from one another into the polymerization reaction system held at 85°C. The dropping times of the respective solutions were as follows: the 80% AA and the 48% NaOH were each dropped for 180 minutes; the 15% NaPS was dropped for 190 minutes; and the 35% SBS was dropped for 175 minutes. In addition, the dropping rates of the respective solutions were made constant, and the droppings of the respective solutions were continuously performed.

After the completion of the dropping of the 80% AA, the reaction solution was further held (aged) at 85°C for 30 minutes. Thus, the polymerization was completed. After the completion of the polymerization, while the polymerization reaction liquid was stirred and left to cool, 197.5 g of the 48% NaOH was gradually dropped to neutralize the polymerization reaction liquid.

Thus, a polymer aqueous solution (C2) containing a polymer (C2) and having a solid content concentration of 45% was obtained. The weight-average molecular weight of the polymer (C2) was 2,000.

The results are shown in Table 1.

### [Comparative Example 3]: Sodium Polyacrylate

146.8 Grams of pure water and 0.0186 g of Mohr's salt were loaded into a glass separable flask having a volume of 1,000 mL, the flask including a reflux condenser and a stirrer (paddle blade) , and the temperature of the mixture was increased to 85°C while the mixture was stirred. Thus, a polymerization reaction system was obtained. Next, under stirring, 270.0 g of 80% AA, 12.5 g of 48% NaOH, 20 g of 15% NaPS, and 10 g of 35% SBS were dropped from nozzles different from one another into the polymerization reaction system held at 85°C. The dropping times of the respective solutions were as follows: the 80% AA and the 48% NaOH were each dropped for 180 minutes; the 15% NaPS was dropped for 190 minutes; and the 35% SBS was dropped for 175 minutes. In addition, the dropping rates of the respective solutions were made constant, and the droppings of the respective solutions were continuously performed.

After the completion of the dropping of the 80% AA, the reaction solution was further held (aged) at 85°C for 30 minutes. Thus, the polymerization was completed. After the completion of the polymerization, while the polymerization reaction liquid was stirred and left to cool, 197.5 g of the 48% NaOH was gradually dropped to neutralize the polymerization reaction liquid.

Thus, a polymer aqueous solution (C3) containing a polymer (C3) and having a solid content concentration of 45% was obtained. The weight-average molecular weight of the polymer (C3) was 50,000.

The results are shown in Table 1.

**Table 1**

| | Polymer | Composition ratio of polymer (mol%) | | | Weight-ave rage molecular weight of polymer | Calcium ion-trapping ability (mgCaCO₃/g) |
|---|---|---|---|---|---|---|
| | | Structural unit derived from monomer (a) | Structural unit derived from monomer (b) | Structural unit derived from monomer (c) | | |
| Example 1 | Copolymer | 47 | 48 | 5 | 4,000 | 350 |
| Example 2 | Copolymer | 75 | 20 | 5 | 5,200 | 285 |
| Comparative Example 1 | Polymer (C1) | 100 | 0 | 0 | 5,000 | 240 |
| Comparative Example 2 | Polymer (C2) | 100 | 0 | 0 | 2,000 | 185 |
| Comparative Example 3 | Polymer (C3) | 100 | 0 | 0 | 50,000 | 245 |

As shown in Table 1, the calcium ion-trapping abilities of the copolymers obtained in Examples are found to be at sufficient levels as compared to those of the polymers obtained in Comparative Examples.

### Industrial Applicability

The copolymer of the present invention can be utilized as, for example, a water treatment agent, a fiber treatment agent, a dispersant, a scale inhibitor (a scale control chemical or a scale inhibitor for an RO membrane), a metal ion-sequestering agent, a thickener, various binders, an emulsifying agent, a detergent, a skin care agent, a hair care agent, and a deodorant.

## Claims

1. A copolymer, comprising:
0.1 mol% to 99 mol% of a structural unit (A) derived from a monoethylenically unsaturated monocarboxylic acid (salt) monomer (a) ;
0.1 mol% to 99 mol% of a structural unit (B) derived from a monomer (b) serving as a monoethylenically unsaturated dicarboxylic acid (salt) or an anhydride thereof; and
0.1 mol% to 50 mol% of a structural unit (C) derived from an ether bond-containing hydrophobic monomer (c),
wherein the ether bond-containing hydrophobic monomer (c) comprises at least one kind selected from 1-allyloxy-3-butoxypropan-2-ol represented by the chemical formula (2), a hexene oxide adduct of isoprenol represented by the chemical formula (3), and allyl butyl ether represented by the chemical formula (4) .

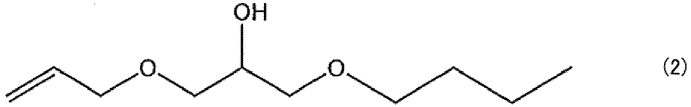

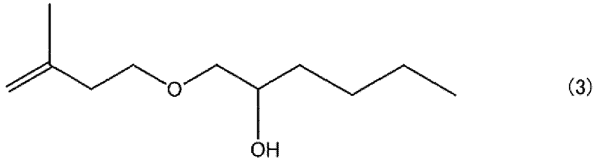

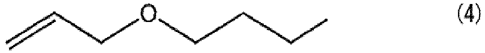

2. The copolymer according to claim 1, wherein a total content of the structural unit (A), the structural unit (B), and the structural unit (C) with respect to a total of all structural units derived from monomers in the copolymer is from 90 mol% to 100 mol%.

3. The copolymer according to claim 2, wherein the content is substantially 100 mol%.

4. The copolymer according to any one of claims 1 to 3, wherein a content of the structural unit (A) with respect to a total of all structural units derived from monomers in the copolymer is from 30 mol% to 80 mol%.

5. The copolymer according to any one of claims 1 to 4, wherein a content of the structural unit (B) with respect to a total of all structural units derived from monomers in the copolymer is from 10 mol% to 60 mol%.

6. The copolymer according to any one of claims 1 to 5, wherein a content of the structural unit (C) with respect to a total of all structural units derived from monomers in the copolymer is from 1 mol% to 10 mol%.

7. The copolymer according to claim 6, wherein the content is from 2 mol% to 8 mol%.

8. The copolymer according to claim 7, wherein the content is from 3 mol% to 7 mol%.

9. The copolymer according to any one of claims 1 to 8, wherein the copolymer has a weight-average molecular weight of from 1,000 to 500,000, measured using GPC as described in the experimental part of the specification.

10. The copolymer according to claim 9, wherein the weight-average molecular weight is from 3,000 to 10,000.

11. The copolymer according to any one of claims 1 to 10, wherein the monoethylenically unsaturated monocarboxylic acid (salt) monomer (a) comprises a monoethylenically unsaturated carboxylic acid (salt) monomer having 3 to 8 carbon atoms.

12. The copolymer according to claim 11, wherein the monoethylenically unsaturated monocarboxylic acid (salt) monomer (a) comprises acrylic acid (salt).

13. The copolymer according to any one of claims 1 to 12, wherein the monomer (b) serving as a monoethylenically unsaturated dicarboxylic acid (salt) or an anhydride thereof comprises a monoethylenically unsaturated dicarboxylic acid (salt) having 4 to 6 carbon atoms or an anhydride thereof.

14. The copolymer according to claim 13, wherein the monomer (b) serving as a monoethylenically unsaturated dicarboxylic acid (salt) or an anhydride thereof comprises at least one kind selected from maleic acid (salt) and maleic anhydride (salt).

15. The copolymer according to any one of claims 1 to 14, wherein the ether bond-containing hydrophobic monomer (c) comprises 1-allyloxy-3-butoxypropan-2-ol.

16. The copolymer according to any one of claims 1 to 15, wherein the copolymer has a calcium ion-trapping ability of from 260 mgCaCO₃/g to 600 mg CaCO₃/g, measured as described in the experimental part of the specification.

17. The copolymer according to any one of claim 1 to 16, wherein the copolymer is used in a water treatment agent.

## Patentansprüche

1. Copolymer, umfassend:
0,1 Mol-% bis 99 Mol-% einer Struktureinheit (A), abgeleitet von einem monoethylenisch ungesättigten Monocarbonsäure- (Salz-) Monomer (a);
0,1 Mol-% bis 99 Mol-% einer Struktureinheit (B), abgeleitet von einem Monomer (b), das als eine monoethylenisch ungesättigte Dicarbonsäure (ein monoethylenisch ungesättigtes Dicarbonsäure-Salz) oder ein Anhydrid davon dient; und
0,1 Mol-% bis 50 Mol-% einer Struktureinheit (C), abgeleitet von einem Etherbindungenthaltenden hydrophoben Monomer (c),
wobei das Etherbindung-enthaltende hydrophobe Monomer (c) mindestens eine Art umfasst, ausgewählt aus 1-Allyloxy-3-butoxypropan-2-ol, dargestellt durch die chemische Formel (2), ein Hexenoxid-Addukt von Isoprenol, dargestellt durch die chemische Formel (3), und Allylbutylether, dargestellt durch die chemische Formel (4).

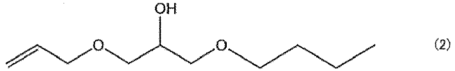

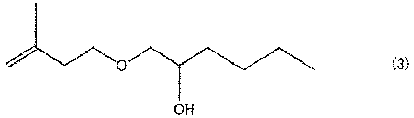

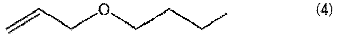

2. Copolymer nach Anspruch 1, wobei ein Gesamtgehalt der Struktureinheit (A), der Struktureinheit (B) und der Struktureinheit (C) in Bezug auf eine Gesamtheit aller von Monomeren abgeleiteten Struktureinheiten im Copolymer von 90 Mol-% bis 100 Mol-% beträgt.

3. Copolymer nach Anspruch 2, wobei der Gehalt im Wesentlichen 100 Mol-% beträgt.

4. Copolymer nach einem der Ansprüche 1 bis 3, wobei ein Gehalt der Struktureinheit (A) in Bezug auf eine Gesamtheit aller von Monomeren abgeleiteten Struktureinheiten in dem Copolymer von 30 Mol-% bis 80 Mol-% beträgt.

5. Copolymer nach einem der Ansprüche 1 bis 4, wobei ein Gehalt der Struktureinheit (B) in Bezug auf eine Gesamtheit aller von Monomeren abgeleiteten Struktureinheiten in dem Copolymervon 10 Mol-% bis 60 Mol-% beträgt.

6. Copolymer nach einem der Ansprüche 1 bis 5, wobei ein Gehalt der Struktureinheit (C) in Bezug auf eine Gesamtheit aller von Monomeren abgeleiteten Struktureinheiten in dem Copolymer von 1 Mol-% bis 10 Mol-% beträgt.

7. Copolymer nach Anspruch 6, wobei der Gehalt von 2 Mol-% bis 8 Mol-% beträgt.

8. Copolymer nach Anspruch 7, wobei der Gehalt von 3 Mol-% bis 7 Mol-% beträgt.

9. Copolymer nach einem der Ansprüche 1 bis 8, wobei das Copolymer ein gewichtsmittleres Molekulargewicht von 1.000 bis 500.000 aufweist, gemessen unter Verwendung von GPC, wie im experimentellen Teil der Beschreibung beschrieben.

10. Copolymer nach Anspruch 9, wobei das gewichtsmittlere Molekulargewicht von 3.000 bis 10.000 beträgt.

11. Copolymer nach einem der Ansprüche 1 bis 10, wobei das monoethylenisch ungesättigte Monocarbonsäure- (Salz-) Monomer (a) ein monoethylenisch ungesättigtes Carbonsäure- (Salz-) Monomer mit 3 bis 8 Kohlenstoffatomen umfasst.

12. Copolymer nach Anspruch 11, wobei das monoethylenisch ungesättigte Monocarbonsäure-(Salz-) Monomer (a) Acrylsäure umfasst.

13. Copolymer nach einem der Ansprüche 1 bis 12, wobei das Monomer (b), das als eine monoethylenisch ungesättigte Dicarbonsäure (ein monoethylenisch ungesättigtes Dicarbonsäure-Salz) oder ein Anhydrid davon dient, eine monoethylenisch ungesättigte Dicarbonsäure (ein monoethylenisch ungesättigtes Dicarbonsäure-Salz) mit 4 bis 6 Kohlenstoffatomen oder ein Anhydrid davon umfasst.

14. Copolymer nach Anspruch 13, wobei das Monomer (b), das als eine monoethylenisch ungesättigte Dicarbonsäure (ein monoethylenisch ungesättigtes Dicarbonsäure-Salz) oder ein Anhydrid davon dient, mindestens eine Art umfasst, ausgewählt aus Maleinsäure- (Salz) und Maleinsäureanhydrid- (Salz).

15. Copolymer nach einem der Ansprüche 1 bis 14, wobei das Etherbindung-enthaltende hydrophobe Monomer (c) 1-Allyloxy-3-butoxypropan-2-ol umfasst.

16. Copolymer nach einem der Ansprüche 1 bis 15, wobei das Copolymer eine Calciumion-Einfangfähigkeit von 260 mg CaCO₃/g bis 600 mg CaCO₃/g aufweist, gemessen wie im experimentellen Teil der Beschreibung beschrieben.

17. Copolymer nach einem der Ansprüche 1 bis 16, wobei das Copolymer in einem Wasserbehandlungsmittel verwendet wird.

## Revendications

1. Copolymère, comprenant :
de 0,1 % en moles à 99 % en moles d'un motif structural (A) dérivé d'un monomère (de sel) d'acide monocarboxylique monoéthyléniquement insaturé (a) ;
de 0,1% en moles à 99 % en moles d'un motif structural (B) dérivé d'un monomère (b) servant (de sel) d'acide dicarboxylique monoéthyléniquement insaturé ou d'un anhydride de celui-ci ; et
de 0,1% en moles à 50 % en moles d'un motif structural (C) dérivé d'un monomère hydrophobe contenant une liaison éther (c),
dans lequel le monomère hydrophobe contenant une liaison éther (c) comprend au moins une sorte sélectionnée parmi le 1-allyloxy-3-butoxypropan-2-ol représenté par la formule chimique (2), un produit d'addition d'oxyde d'hexène et d'isoprénol représenté par la formule chimique (3), et un allyl butyl éther représenté par la formule (4).

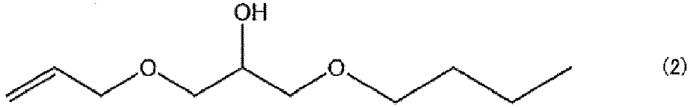

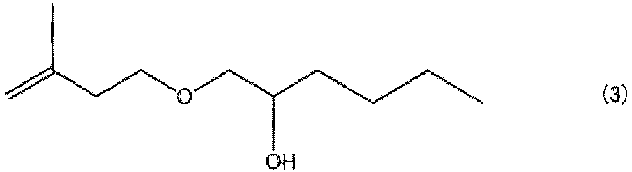

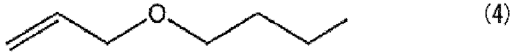

2. Copolymère selon la revendication 1, dans lequel une teneur totale en le motif structural (A), le motif structural (B), et le motif structural (C) par rapport à un total de tous les motifs structuraux dérivés de monomères dans le copolymère est de 90 % en moles à 100% en moles.

3. Copolymère selon la revendication 2, dans lequel la teneur est sensiblement de 100 % en moles.

4. Copolymère selon l'une quelconque des revendications 1 à 3, dans lequel une teneur en le motif structural (A) par rapport à un total de tous les motifs structuraux dérivés de monomères dans le copolymère est de 30 % en moles à 80 % en moles.

5. Copolymère selon l'une quelconque des revendications 1 à 4, dans lequel une teneur en le motif structural (B) par rapport à un total de tous les motifs structuraux dérivés de monomères dans le copolymère est de 10% en moles à 60 % en moles.

6. Copolymère selon l'une quelconque des revendications 1 à 5, dans lequel une teneur en le motif structural (C) par rapport à un total de tous les motifs structuraux dérivés de monomères dans le copolymère est de 1% en moles à 10% en moles.

7. Copolymère selon la revendication 6, dans lequel la teneur est de 2 % en moles à 8 % en moles.

8. Copolymère selon la revendication 7, dans lequel la teneur est de 3 % en moles à 7 % en moles.

9. Copolymère selon l'une quelconque des revendications 1 à 8, dans lequel le copolymère a un poids moléculaire moyen en poids de 1 000 à 500 000, mesuré par CPG tel que décrit dans la partie expérimentale de la description.

10. Copolymère selon la revendication 9, dans lequel le poids moléculaire moyen en poids est de 3 000 à 10 000.

11. Copolymère selon l'une quelconque des revendications 1 à 10, dans lequel monomère (de sel) d'acide monocarboxylique monoéthyléniquement insaturé (a) comprend un monomère (de sel) d'acide carboxylique monoéthyléniquement insaturé ayant de 3 à 8 atomes de carbone.

12. Copolymère selon la revendication 11, dans lequel le monomère (de sel) d'acide monocarboxylique monoéthyléniquement insaturé (a) comprend un (sel d') acide acrylique.

13. Copolymère selon l'une quelconque des revendications 1 à 12, dans lequel le monomère (b) servant (de sel) d'acide dicarboxylique monoéthyléniquement insaturé ou d'anhydride de celui-ci comprend un (sel d') acide dicarboxylique monoéthyléniquement insaturé ayant 4 à 6 atomes de carbone ou un anhydride de celui-ci.

14. Copolymère selon la revendication 13, dans lequel le monomère (b) servant (de sel) d'acide dicarboxylique monoéthyléniquement insaturé ou d'anhydride de celui-ci comprend au moins une sorte (de sel) d'acide maléique et (de sel) d'anhydride maléique.

15. Copolymère selon l'une quelconque des revendications 1 à 14, dans lequel le monomère hydrophobe contenant une liaison éther (c) comprend un 1-allyloxy-3-butoxypropan-2-ol.

16. Copolymère selon l'une quelconque des revendications 1 à 15, dans lequel le copolymère présente une capacité à capturer des ions calcium de 260 mgCaCO₃/g à 600 mgCaCO₃/g, mesurée tel que décrit dans la partie expérimentale de la description.

17. Copolymère selon l'une quelconque des revendications 1 à 16, dans lequel copolymère est utilisé dans un agent de traitement de l'eau.
